# EUROPÄISCHE PATENTANMELDUNG

(11) **EP 1 323 679 A2**
(43) Veröffentlichungstag der Anmeldung: **02.07.2003**
(21) Anmeldenummer: 02028901.3
(22) Anmeldetag: 23.12.2002
(51) Int. Cl.: C02F 1/72

(54) **Peroxoverbindung enthaltende Stoffzusammensetzung zur Reinigung von Wasser**

(30) Priorität: 28.12.2001 RU 2001135442
(71) Anmelder: Pawlow, Maxim Walerjewitsch, RF-142190 MO.,g. Troizk (RU)
(72) Erfinder: Pawlow, Maxim Walerjewitsch, RF-142190 MO., Troizk (RU); Safronow, Anatolij Petrowitsch, RF-143952 MO., Reutow (RU); Marakow, Wladimir Jurjewitsch, RF-103045 Moskau (RU); Makarenkow, Alexandr Dmitrijewitsch, RF-142190 MO., Troizk (RU); Schimon, Andrej Ernestowitsch, RF-142190 MO., Troizk (RU)
(74) Vertreter: Jaap, Reinhard

(57) **Zusammenfassung**

Die Erfindung gehört zu den Verfahren der chemischen Reinigung von Wasser und betrifft eine Stoffzusammensetzung zur Desinfektion von Wasser, die Peroxosolvat des Kaliumfluorids enthält, wobei sie zusätzlich 5,5- Dimethylhydantoin enthält, in folgendem Verhältnis der Komponenten in Massen %:

| | |
|---|---|
| Peroxosolvat des Kaliumfluorids | 99 - 99,8 |
| 5,5- Dimethylhydantoin | 0,2 - 1,0 |

## Beschreibung

Die Erfindung zählt zu den Verfahren der chemischen Reinigung von Wasser und speziell zu den Verfahren zur Entfernung von überschüssigem aktivem Chlor aus Hypochloritlösungen bei der Reinigung von Trinkwasser und Abwasser und ebenso zur Reinigung des Wassers von Bakterien.

Gegenwärtig finden in der Praxis der Wasseraufbereitung zum Unschädlichmachen von Hypochloritlösungen chemische Prozesse eine breite Anwendung, die zur Reduktion des Hypochlorit- Ions führen.

Bekannt ist ein Verfahren zum Unschädlichmachen von Hypochloritlösungen, bei dem diese mit Karbamid bei 10- 50 Grad Celsius bearbeitet werden. Der Restbestandteil an aktivem Chlor beträgt ungefähr 1 mg/ Liter. Der vollständige Zerfall des Hypochlorits wird in 40 Minuten erreicht, wobei als Reduktionsmittel Hydroxylamin eingesetzt wird. Der Prozess wird bei 50- 70 Grad Celsius und bei einem Überschuss des Reduktionsmittels geführt (Urheberschein Nr. 311866, Klasse C 01 B 11/06, im Jahre 1971).

Nachteile der bekannten Methode sind die Notwendigkeit einer strengen Kontrolle der Prozessparameter, die Notwendigkeit des Erwärmens, die Verwendung eines Überschusses des Reduktionsmittels, das aktive Vermischen und der lang andauernde Kontakt zwischen den Reagenzien.

Aus technologischer Sicht am nächsten kommt dem vorgeschlagenen Verfahren ein Verfahren zur Reinigung des Wassers von Hypochloritresten durch Beifügen von Peroxosolvat des Natriumkarbonates oder Peroxosolvat des Harnstoffs oder Peroxosolvat des Kaliumfluorids, das heißt als Stoffzusammensetzung für die Reinigung von Wasser wird nur eine Komponente benutzt.

Der Nachteil des bekannten Verfahrens und der Stoffzusammensetzung zur Reinigung von Wasser besteht darin, dass das Peroxosolvat des Natriumkarbonates oder das Peroxosolvat des Harnstoffs oder das Peroxosolvat des Kaliumfluorids die Reinigung des Wassers nicht schnell genug bewirken. Wenn im Wasser Hypochlorit vorhanden ist, so erfolgt dessen Zerlegung schnell, aber die Vernichtung der Bakterien erfolgt praktisch nicht. Aber gerade zur Vernichtung der Bakterien ist die Beigabe der Hypochlorite erforderlich.

Das technische Resultat der Anwendung der erfindungsgemäßen Stoffzusammensetzung zur Reinigung von Wasser besteht in der Benutzung von Stoffen, die nicht nur das Wasser reinigen, sondern in das Wasser auch Komponenten einbringen, die selbst Mikroelemente sind und dem Wasser eine Heilwirkung geben, und ebenso in der Verbesserung der Qualität der Reinigung des bearbeiteten Wassers wegen der vollständigen Beseitigung der Mikroorganismen im Wasser. Dieser Reinigungsprozess verläuft schneller als in der bekannten technischen Lösung.

Das gestellte Ziel wird durch die Anwendung einer Stoffzusammensetzung erreicht, die Peroxosolvat des Kaliumfluorids enthält, wobei sie zusätzlich 5,5-Dimethylhydantoin enthält, in folgendem Verhältnis der Komponenten in Massen %:

| | |
|---|---|
| Peroxosolvat des Kaliumfluorids | 99- 99,8 |
| 5,5- Dimethylhydantoin | 0,2- 1,0 |

Die Beigabe von 5,5- Dimethylhydantoin zum bekannten Peroxosolvat des Kaliumfluorids führt dazu, dass sich das Wachstum der Mikroorganismen heftig und schnell verringert, d.h. der Reinigungsprozess verläuft schneller. Dass die Anwendung der beiden aufgeführten Stoffe zu einem ähnlichen Resultat führen würde, hätte man voraussetzen können, aber nicht, dass die geringen Mengen des 5,5- Dimethylhydantoin zu einem vergleichbaren Resultat führen. Viel zu gering ist die Menge dieses Stoffs.

Die vorgeschlagene Stoffzusammensetzung reinigt nicht nur das Wasser von Mikroorganismen, sondern beseitigt auch das Hypochlorit, von dem ein Überschuss im Wasser vorhanden sein kann. Darüber hinaus wurde festgestellt, dass sich durch Einbringen der vorgeschlagenen Stoffzusammensetzung der Prozess des Biobewuchses in den Rohrleitungen stark verringert und Algen im Wasser eine recht lange Zeit nicht in Erscheinung treten.

Bei der Anwendung von stabilem Peroxosolvat des Natriumkarbonates ergeben sich als Produkte der Reaktion nur nichttoxische Verbindungen: NaCl, Na₂Co₃, O₂ und H₂O. Die Beseitigung des aktiven Chlors erfolgt sehr schnell, sogar bei 0 Grad Celsius dauert sie nur einige Sekunden.
Eine große Bedeutung hat dieser Fakt bei der Desinfektion von Haushaltsabwässern mit hohem Bakterienbesatz. Zur Desinfektion dieses Wassers werden entweder die Beigaben hoher Dosen von Chlor und Restchlor benötigt oder es erfolgt die Erhöhung der Kontaktzeit mit dem Chlor. Die Anwendung hoher Chlordosen ist nicht wünschenswert, da sie mit einer Erhöhung des Niveaus der allgemeinen Toxizität des Wassers verbunden ist. Die Erhöhung der Kontaktzeit ist unter realen Bedingungen ohne bedeutenden Aufwand schwer zu verwirklichen. Deshalb wird mitunter eine zusätzliche Operation bei der Desinfektion eingeschoben, zum Beispiel die Bearbeitung mit Ozon. Die bekannten Methoden der Entfernung des überschüssigen aktiven Chlors führen nicht zu einer zusätzlichen Desinfektion des Wassers und zu dessen Sättigung mit Sauerstoff.

### Beispiel 1:

Verschmutztes Wasser ist charakterisiert durch einen allgemeinen Bestandteil an Mikroflora von 0,3x 10⁴ Mikroorganismen pro Liter (M.O./1). Dem Wasser wird eine Stoffzusammensetzung beigegeben, die Peroxosolvat des Kaliumfluorids -99,5 Massen % und 5,5- Dimethylhydantoin- 0,5 Massen % enthält.

Nach einer Stunde zeigte die Analyse die vollständige Vernichtung der Bakterien und ebenso die vollständige Beseitigung von Hypochloritspuren.

### Beispiel 2:

Verschmutztes Wasser enthält eine Testkultur des Bacillus anthracis, 10⁸ Sporen pro Liter. Dem Wasser wird eine Stoffzusammensetzung beigegeben, die Peroxosolvat des Kaliumfluorids -99,4 Massen % und 5,5- Dimethylhydantoin- 0,6 Massen % enthält. Nach einer Stunde zeigte die Analyse die vollständige Vernichtung der Sporen der Testkultur und ebenso die vollständige Beseitigung von Hypochloritspuren.

Die vorgeschlagene Methode erfordert keine strenge Kontrolle über die Menge der beigefügten Reagenzien, ist effektiv bei unterschiedlichen Temperaturen und kann in einem beliebigen existierenden Wasserreinigungssystem angewendet werden, ohne dass bedeutender Kapitalaufwand erforderlich ist.

## Patentansprüche

1. Stoffzusammensetzung zur Reinigung von Wasser, die Peroxosolvat des Kaliumfluorids enthält, **gekennzeichnet dadurch, dass** die Stoffzusammensetzung zusätzlich 5,5- Dimethylhydantoin enthält, bei folgendem Verhältnis der Komponenten in Massen %:
| | |
|---|---|
| Peroxosolvat des Kaliumfluorids | 99 - 99,8 |
| 5,5- Dimethylhydantoin | 0,2 - 1,0 |
